# EUROPEAN PATENT APPLICATION

(11) **EP 1 710 731 A2**
(43) Date of publication of application: **11.10.2006**
(21) Application number: 05020129.2
(22) Date of filing: 15.09.2005
(51) Int. Cl.: G06K 17/00, G06K 15/00, G06K 1/12

(54) **Electronic document management and generation**

(30) Priority: 05.04.2005 JP 2005108643
(71) Applicant: FUJI XEROX CO., LTD., Minato-ku, Tokyo (JP)
(72) Inventor: Katsurabayashi, Hiroshi, Kawasaki-shi Kanagawa (JP)
(74) Representative: Grünecker, Kinkeldey, Stockmair & Schwanhäusser Anwaltssozietät

(57) **Abstract**

An electronic document management system includes: a print instruction unit that issues a print instruction to print an electronic document; an address information generation unit that generates address information printed on a surface of a medium for a position of the surface of the medium, based on the print instruction from the print instruction unit, the address information being printed on a surface of a medium on which the electronic document is printed; an electronic document management unit that manages the correlation between the address information generated by the address information generation unit and the electronic document; an accumulation unit that accumulates information concerning the correlation to be managed by the electronic document management unit; a code image generation unit that converts the address information into a code image to be printed; and a printing unit that prints the code image generated by a code image generation unit and an image of the electronic document on the surface of the medium.

## Description

### BACKGROUND OF THE INVENTION

### Field of the Invention

The present invention relates to an image forming device, such as a copier or a printer, to an electronic document management system that manages electronic documents to be printed by such an image forming device, and the like.

### Background Art

Recently, a technique is attracting attention in which a user is allowed to send data, such as characters or figures recorded on a special paper with minute dots printed thereon, to a personal computer or a mobile phone, such that data can be preserved or be sent by mail. With this technique, small dots are printed on the special paper, for example, at intervals of about 0.3 mm, such that different patterns can be drawn, for example, for each grid having a predetermined size. Accordingly, it is possible to specify addresses for data, such as characters recorded on the special paper by reading the patterns, for example, using a special ball-point pen equipped with a digital camera. As a result, handwritten characters recorded on the paper can be used as electronic information.

As a technique according to the related art, a technique has been known in which corrected information is correlated with information before the correction of a medium in real time without using a tablet, by detecting coordinates of a written trajectory on the medium, for example, by decoding a code symbol indicating a coordinate on the medium and by detecting a position of a point on the medium using the position, direction, and distortion of the code symbol, or the like.

In addition, a technique has been known in which a two-dimensional code pattern to be printed together with documents on demand using a typical general-purpose printer is provided. According to the above mentioned technique, since the two-dimensional code has identification information for identifying a document page, information corrected by hand in a printed document can be reflected in an original document.

In a current image forming device, such as a copier or a printer, when a paper document is printed out from the image forming device, the paper document is disconnected from a document archive (document repository). As a result, a service is not supported from the paper document. In particular, in image forming devices or image forming systems to appear in the future, contact points (for example, document handling, such as inputting, outputting, managing, and correcting documents) between various document archives and portals have to be comprehensively supported.

In the technique mentioned above, coordinate information is provided on a paper on which document information is printed and is read, and an original document is correlated with the coordinate information. Thus, since the coordinate information needs to be recorded on the paper in advance, a special paper is needed. In addition, in order to correlate the original document with the coordinate information, a device for reading two-dimensional codes at the time of printing need to be separately provided. Otherwise, it is not possible to manage the relation between documents and printing.

Also, in another technique , when a document is printed, a two-dimensional code is also printed using a typical printing device without preparing a paper with the two-dimensional code printed thereon. The two-dimensional code is generated as a two-dimensional code pattern for the page of the document to be printed by receiving a document page ID for each page with reference to a document management database. However, , the management is performed by correlating the document surface ID for each page of the printed document with the page of the printed document. Thus, when a plurality of copies of the same document are printed, the copies have the same document surface ID. Accordingly, it is not possible to manage the copies individually.

Also, the position information mentioned above is assigned among position information collectively managed in advance, instead of being generated at the time of printing. Thus, there is a strict limitation on position information to be selected.

### SUMMARY OF THE INVENTION

The present invention has been made in view of the above circumstancesand address to manage a document with the relationship between an address space used in a printed output medium and an original document.

According to an embodiment of the present invention, an electronic document management system comprises a print instruction unit that issues a print instruction to print an electronic document; an address information generation unit that generates address information printed on a surface of a medium for a position of the surface of the medium based on the print instruction from the print instruction unit, the address information being printed on a surface of a medium on which the electronic document is printed; an electronic document management unit that manages the correlation between the address information generated by the address information generation unit and the electronic document; an accumulation unit that accumulates information concerning the correlation to be managed by the electronic document management unit; a code image generation unit that converts the address information into a code image to be printed; and a printing unit that prints the code image generated by a code image generation unit and an image of the electronic document on the surface of the medium.

According to another embodiment of the present invention, an image forming device comprises an address information generation unit that receives a print instruction to print an electronic document and dynamically generates address information concerning consecutive addresses printed on a surface of a medium; a code image generation unit that generates a code image to be printed including the address information generated by the address information generation unit; and a printing unit that prints an image of the electronic document and the code image so as to overlap each other.

According to another embodiment of the present invention, a device comprises an electronic document management unit that manages the correlation between an electronic document to be printed and address information concerning consecutive addresses, which are dynamically generated based on a print instruction to print the electronic document to fit to the size of a medium, on which the electronic document is printed, and are printed on a surface of the medium; and an electronic document address accumulation unit that accumulates the information managed by the electronic document management unit.

According to another embodiment of the present invention, a printing medium comprises a first image, in which an electronic document is printed in a visible image based on an instruction of a user; and a second image that is formed in a non-visible image on a side of an image surface including a region in which the first image is formed, and has address information concerning consecutive addresses generated to fit to the size of the medium on the basis of the print instruction.

According to another embodiment of the present invention, a method of managing an electronic document, the method comprises; receiving a print instruction to print an electronic document; generating address information that is printed on a surface of a medium to fit to the size of the medium, on which the electronic document is printed, and specifies a position of the surface of the medium on the basis of the print instruction; accumulating information concerning a correlation between the address information and the electronic document in a memory; and converting the address information into a code image to be printed.

According to another embodiment of the present invention, a program product readable by a computer, the program product storing a program of instructions executable by the computer to perform a function for managing a printed electronic document, the function comprises; generating address information which is printed on a surface of a medium to fit to the size of the medium, on which the electronic document is printed, and specifies a position of the surface of the medium on the basis of the print instruction; and accumulating information concerning the correlation between the generated address information and the electronic document in a memory.

### BRIEF DESCRIPTION OF THE DRAWINGS

Embodiments of the present invention will be described in detail based on the following figures, wherein:
Fig. 1 is a diagram showing the overall configuration of an electronic document management system to which an embodiment of the present invention is applied.
Figs. 2A and 2B are diagrams illustrating a two-dimensional code image generated by a code image generating section of a printing device and printed by a printing section.
Fig. 3 is a flow chart showing a process of embedding an address which is executed by the printing device shown in Fig. 1.
Fig. 4 is a diagram showing an example of a printing image including a code image.
Fig. 5 is a diagram showing the configuration of a printing section (image forming section), which forms a visible image and a non-visible image simultaneously, according to the embodiment of the present invention.
Fig. 6 is a diagram showing a data structure for managing the correlation between an electronic document, address information, and medium identification information.
Fig. 7 is a diagram showing the configuration of a pen-type input device.
Fig. 8 is a flow chart showing a process, which is primarily executed by a control section of a pen-type input device.
Fig. 9 is a diagram showing another configuration of an electronic document management system.
Fig. 10 is a diagram showing another configuration of an electronic document management system.

### DETAILED DESCRIPTION OF THE EMBODIMENTS

Embodiments according to the present invention will now be described in detail with reference to the accompanying drawings.

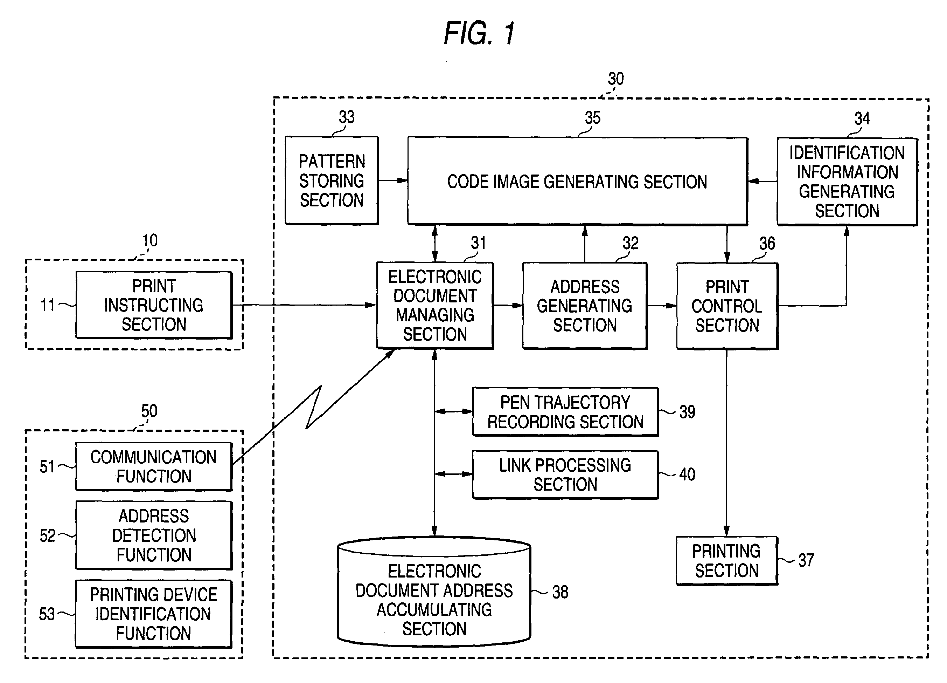

Fig. 1 shows the overall configuration of an electronic document management system according to an embodiment of the present invention. The electronic document management system shown in Fig. 1 includes a personal computer (PC) 10 that instructs to print electronic documents, a printing device 30 that prints the electronic documents on a medium, such as a paper or the like, and a pen-type input device 50 that reads address information concerning the medium on which the electronic document is printed by the printing device 30 or the like.

The personal computer 10 includes a print instructing section 11 that instructs the printing device 30 to print. The print instructing section 11 instructs to print the electronic documents owned by the personal computer 10 and, for example, also instructs to print documents stored in an external electronic document database (document repository) using URLs (Uniform Resource Locators). When instructing to print the documents, the print instructing section 11 instructs the magnification ratio or Nup. In the Nup information, the number of sheets of the electronic document printed on a medium is specified. Also, the personal computer 10 can be constituted to function as a device, for example, for editing, writing, or storing the electronic documents. In this case, the personal computer 10 includes such a print instructing section 11, which instructs the electronic documents to print, as a function.

The printing device 30 includes an electronic document managing section 31 that manages the correlation between a generated address and an electronic document, and an address generating section 32 that generates address information concerning consecutive addresses to be printed on a medium. Also, the printing device 30 includes a pattern storing section 33 that stores patterns used as code images in a memory, and an identification information generating section 34 that generates information (medium identification information) for specifying a medium. Also, the printing device 30 includes a code image generating section 35 that generates code images using patterns read from the pattern storing section 33 based on addresses generated and encoded by the address generating section 32 and medium identification information generated and encoded by the identification information generating section 34. Also, the printing device 30 includes a print control section 36 that performs the print control for printing the inputted electronic document and the generated code image, and a printing section (image forming section) 37 that, for example, prints code images or electronic documents by an electro-photographic method. Also, as described in the following data structure, the printing device 30 includes an electronic document address accumulating section 38 that accumulates the correlation between the electronic document, the address information, and the medium identification information, and a pen trajectory recording section 39 that records a pen trajectory made by a user. Also, the printing device 30 includes a link processing section 40 that performs processes based on link information set on the electronic documents.

The electronic document managing section 31 manages in correlating the printed electronic document with the medium identification information for uniquely specifying the medium. Also, the electronic document managing section 31 functions as an electronic document acquisition unit that acquires the electronic documents.

The address information generated by the address generating section 32 is position information printed on a surface of the medium to fit to the size of the printing medium.

The pattern storing section 33 defines, for example, a slant line, such as slash '/'or backslash. '\', or a dot pattern as a pattern used in a code image.

For example, a print-out time (print date and time information) can be used as medium identification information generated by the identification information generating section 34. For example, printing counter may be added to the identification information of the printing device.

The code image generating section 35 stores the identification information and address information encoded through the error correction and error detection in a two-dimensional code. Also, the code image generating section 35 arranges the two-dimensional code in which different address information is stored on an image of a printing size in a grid shape using a pattern stored in the pattern storing section 33.

The print control section 36 performs a processing of overlapping the document image generated from the electronic document and the generated code image. At this time, the print control section 36 controls the printing section 37 according to information concerning a margin of a medium to be printed, the size of the printing medium, or the number of copies.

The pen trajectory recording section 39 interprets a moving trajectory of the pen-type input device 50 using the position information included in the code information and records the motion information of the pen-type input device 50. However, as described below, when the pen-type input device 50 has a function of interpreting the moving trajectory, the pen trajectory recording section 39 does not interpret the moving trajectory of the pen-type input device 50, but records the motion information inputted from the pen-type input device 50. Further, the pen trajectory recording section 39 controls to overlap a corresponding original electronic document and to display on a display device (not shown). Accordingly, it is possible to represent a stroke written on the medium on the electronic document visually on the display device.

When link information is already set on a specified position of an original electronic document, the link processing section 40 has a corresponding table indicating the correlation between the position, URL, and a start program. For example, when a position with a link attached thereto is designated by the pen-type input device 50, the link processing section 40 recognizes by position information interpreted from code information that the link is designated. Next, the link processing section 40 can open a homepage of the designated URL or run programs on a browser based on the corresponding table.

On the other hand, the pen-type input device 50 has a communication function 51 that communicates with external devices, such as the printing device 30, an address detection function 52 that detects addresses having, for example, X and Y coordinates from a two-dimensional code of a printed medium, and a printing device identification function 53 that is included in the two-dimensional code of the medium to identify the printing device, for example, from medium identification information. In the electronic document management system shown in Fig. 1, a direct communication is performed between the pen-type input device 50 and the printing device 30.

The communication function 51 transmits code information concerning a read medium. The communication can be performed by accessing an interface, such as a USB (Universal Serial Bus) or the like, via a cable. In addition, the communication can be performed using a wireless LAN, RS-232C, or Bluetooth.

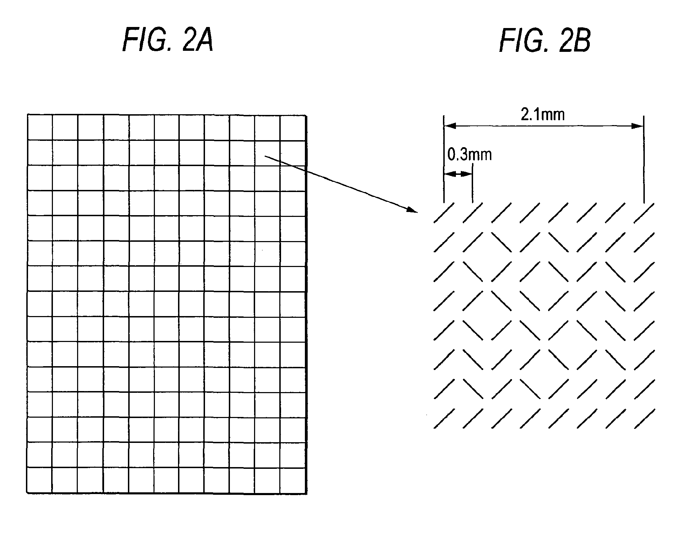

Figs. 2A and 2B are diagrams illustrating two-dimensional code images which are generated by the code image generating section 35 of the printing device 30 and are printed by the printing section 37. Fig. 2A is a diagram showing a two-dimensional code image in a non-visible image and in a grid shape. Fig. 2B is a diagram showing a single unit of a two-dimensional code image in which a non-visible image is recognized by irradiating infrared light. The two-dimensional code image formed by the printing section 37 is formed by a non-visible toner which has a maximum absorption ratio of, for example, 7% or less, in a visible light region (400 to 700 nm), and has an absorption ratio of, for example, at least 30% in a near-infrared region (800 to 1000 nm). Also, the non-visible toner having an average dispersion diameter of 100 to 600 nm is used to improve capability of absorbing the near-infrared light required for mechanical reading of an image. In this case, the term 'visible' and the term 'non-visible' have no relation to whether it can be recognized through the naked eye. The term 'visible' and the term 'non-visible' are distinguished according to whether or not an image formed on a printed medium can be recognized according to a color-forming property due to the absorption of a specified wavelength in a visible light region. Also, a method of forming an image using the non-visible toner is disclosed in Japanese Patent Laid-Open No. 2003-186238.

The two-dimensional code images shown in Figs. 2A and 2B are formed in non-visible images. For the non-visible image, a mechanical reading process by infrared light irradiation and a decoding process can be stably performed over a long period, such that high-density information can be recorded. Also, apart from a region in which a visible image is provided on a surface of a medium to which the image is output, the non-visible image can be provided in any region. In the present embodiment, the non-visible image is formed on the entire surface (space) of a medium to fit to the size of the printed medium. Also, for example, it is more preferable that a non-visible image can be recognized by a difference in gloss as viewed with the naked eye. However, the term 'the entire surface' does not imply that four corners of a paper are included. In a device employing an electro-photographic method, since the circumference of a surface cannot be usually printed, it is not necessary to print the non-visible image in such a range.

A two-dimensional code pattern shown in Fig. 2B is made of a plurality of minute lint bitmaps having different rotational angles. More specifically, bit 0 and bit 1 are represented using the slash '/' and backslash '\' which are different in gradient from each other. For example, the slash '/' represents bit 0 while the backslash '\' represents bit 1. With the minute line bitmap consisting of the two kinds of gradient, it is possible to provide a two-dimensional code pattern. With the two-dimensional code pattern, noise affecting on a visible image is extremely small, and a large amount of information can be embedded with high density. A unit of the minute line has eight dots, each having an interval of 0.3 mm, which results in the size of a unit being about 2.1 mm. Also, a unit of the minute line preferably has three to ten dots. If a unit has too small dots, the amount of information is little. On the contrary, if a unit has more than ten dots, noise occurs in a visible image.

In the two-dimensional code formed in such a manner, medium identification information and address information coded through error correction or error detection are stored. As shown in Fig. 2A, the two-dimensional codes in which different address information is stored are arranged in a grid shape on the entire page (space) of the medium to fit to the size of the medium to be printed.

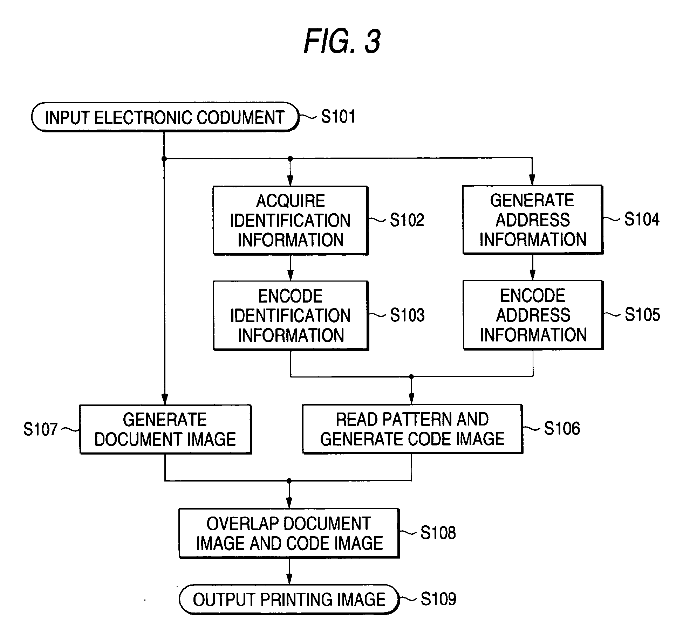

Fig. 3 is a flow chart showing an address embedding process executed by the printing device 30 shown in Fig. 1. The electronic document managing section 31 of the printing device 30 inputs electronic documents based on instructions from the print instructing section 11 of the personal computer 10 (Step S101). The inputted electronic documents may be acquired, for example, from a repository connected to a network using the URL. Also, the electronic document may be accumulated in an electronic document accumulating section (not shown) of the printing device 30, or may be received directly from the personal computer 10 whenever printing is performed. Moreover, the term 'electronic document' is not limited to 'document' or text information but includes images, such as pictures, photos and figures, bitmap images, figure information, or other print information.

The code image generating section 35 having obtained input information of electronic document from the electronic document managing section 31 acquires medium identification information generated by the identification information generating section 34 (Step S102). Next, the code image generating section 35 encodes the acquired medium identification information (Step S103). On the other hand, the address generating section 32 having obtained the input information of the electronic document from the electronic document managing section 31 generates address information concerning consecutive addresses to be printed on one surface of the medium to fit to the size of the printed medium (Step S104). The address generating section 32 encodes the generated address information (Step S105). In the step S104, addresses are generated to fit to the size of the medium to be printed, for example, A4-sized, A3-sized, B5-sized, B4-sized document, or the like. Also, in order to enlarge or reduce the size of the inputted electronic document, the address corresponding to the medium is changed. At this time, for example, when an A4-sized electronic document is reduced to an A5-sized electronic document and then is output on an A4-sized medium, the remaining part becomes a margin. The margin may be assigned with consecutive addresses. Alternatively, the remaining part may remain a margin without forming an image using a non-visible toner.

Subsequently, the code image generating section 35 reads patterns from the pattern storing section 33 and, at the same time, generates code images using encoded medium identification information and encoded address information (Step S106). On the other hand, the print control section 36 images the electronic document to generate a document image (Step S107). For example, when images are expanded in a page memory, input color signals of R (red), G (green), and B (blue) are converted into printed color signals of Y (yellow), M (magenta), C (cyan), and K (black). The print control section 36 overlaps the code image generated in the step S106 and the document image generated in the step S107 (Step S108), and outputs print images to the printing section 37 (Step S109).

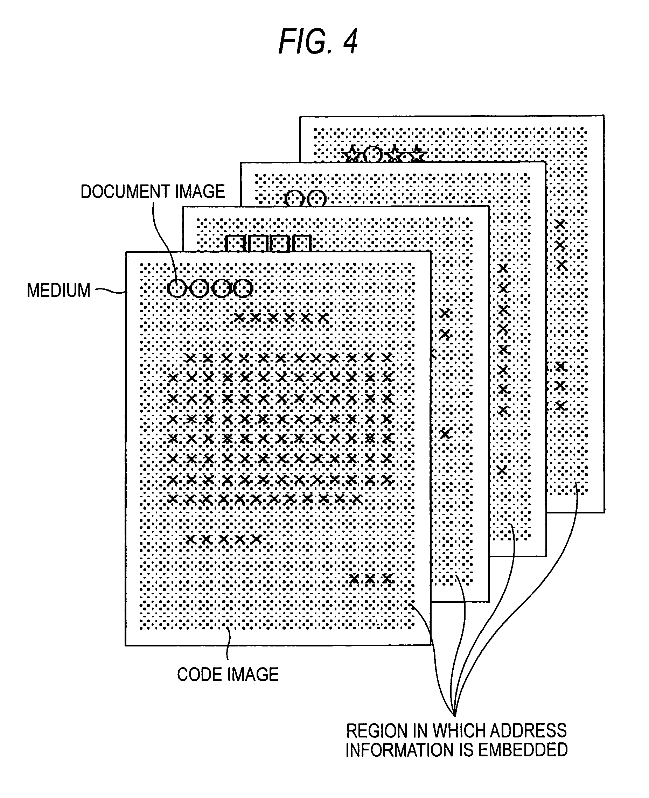

Fig. 4 is a diagram showing an example of a printing image including the code image obtained in such a manner. As shown in Fig. 4, a code image is printed by a non-visible toner on a surface of a medium (image output medium), and a document image formed by a visible toner overlap thereon. A region in which address information is embedded is formed by the code image. As described above, the address information is distributed on a surface of the medium to fit to the size of the printed medium. The code image representing the address information is formed on the entire surface of the medium. Also, in the present embodiment, the medium identification information contained in the code image is different for each medium. Accordingly, although the electronic documents are the same, different identification information is added according to surfaces and the number of copies when a plurality of surfaces or a plurality of copies are printed. That is, even when the same electronic document is printed, contents of the code images are different for each medium.

Moreover, when a photo image is included in the printed electronic document, if the photo image needs not to be contaminated, a process of printing a non-visible image using a non-visible toner cannot be performed on a region in which the photo image is recognized to be formed. It is preferable that a user can select whether or not to perform such a process by providing a user interface to allow the user to make a selection. Also, in order to recognize a photo image part from an electronic document, a text/image separation (T/I separation) technique which is performed in a related art image process may be used. Here, a detailed description thereof will be omitted.

The description of the detailed configuration of the printing section (image forming section) 37 will now be given.

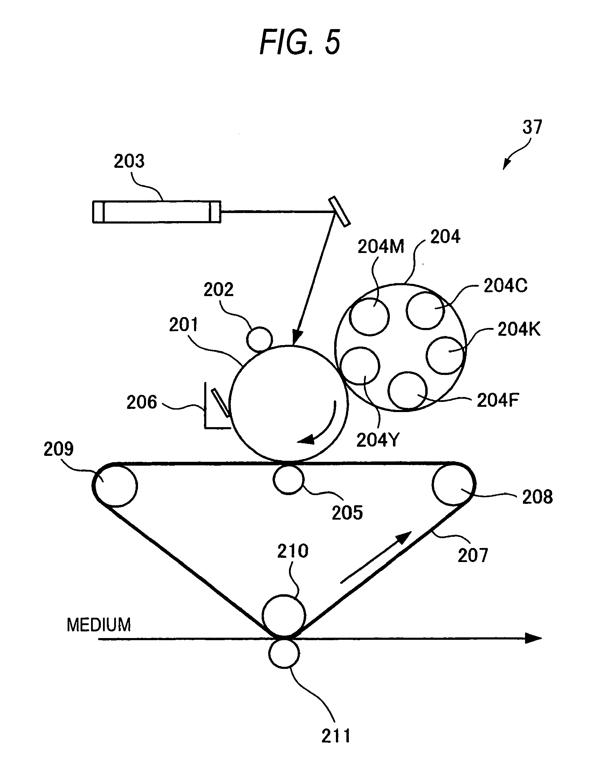

Fig. 5 is a schematic diagram showing the configuration of the printing section (image forming section) 37 that forms visible images and non-visible images simultaneously according to the present embodiment. The printing section 37 shown in Fig. 5 includes an image carrier 201, an electrifier 202, an exposing device 203, a rotary developing device 204, a primary transfer roll 205, a cleaning device 206, an intermediate transfer belt 207, support rolls 208 and 209 of the intermediate transfer belt 207, an opposite roll 210 provided in a secondary transfer section, and a secondary transfer roll 211.

The image carrier 201 is a photosensitive drum having a photosensitive layer on its circumferential surface. The image carrier 201 is provided to be rotatable in a direction of the arrow shown in Fig. 5. The electrifier 202 electrifies a surface of the image carrier 201 uniformly. The exposing device 203 irradiates, for example, a razor beam onto the surface of the image carrier 201 uniformly electrified by the electrifier 202 to form an electrostatic latent image. The rotary developing device 204 includes five developers 204F, 204Y, 204M, 204C, and 204K for receiving a non-visible toner, a yellow toner, a magenta toner, a cyan toner, and a black toner, respectively. In the printing section shown in Fig. 5, since the toners are used as developing agents for forming images, the developers 204F, 204Y, 204M, 204C, and 204K receive the non-visible toner, the yellow toner, the magenta toner, the cyan toner, and the black toner, respectively. The rotary developing device 204 rotates so that the five developers 204F, 204Y, 204M, 204C, and 204K can sequentially approach and face the image carrier 201 to transfer the toners to electrostatic latent images corresponding to each color, thereby forming visible toner images and non-visible toner images.

The primary transfer roll 205 primarily transfers toner images (visible toner images or non-visible toner images) formed on the surface of the image carrier 201 to the outer circumferential surface of the intermediate transfer belt 207 while the intermediate transfer belt 207 is interposed between the primary transfer roll 205 and the image carrier 201. The cleaning device 206 removes toners remaining on the surface of the image carrier 201 after the primary transfer is performed. The intermediate transfer belt 207 is supported by a plurality of support rolls 208 and 209 and an opposite roll 210 so as to rotate in a direction of the arrow shown in Fig. 5. The secondary transfer roll 211 secondarily transfers the toner images transferred on the outer circumferential surface of the intermediate transfer belt 207 onto a medium (paper) transported in a direction of the arrow by a paper transport unit (not shown).

In the printing section 37 constituted in such a manner, the toner images are formed on the surface of the image carrier 201, and then the toner images are transferred to the outer circumferential surface of the intermediate transfer belt 207 in multiple. That is, after the image carrier 201 rotates and the surface of the image carrier 201 is uniformly electrified by the electrifier 202, image light is irradiated by the exposing device 203 onto the image carrier 201 to form an electrostatic latent image. In a process of forming the electrostatic latent image, a non-visible toner image is first formed. That is, after it is developed by the non-visible developer 204F, the toner image is transferred to the outer circumferential surface of the intermediate transfer belt 207 by the primary transfer roll 205. At this time, the non-visible toner which is not transferred to the intermediate transfer belt 207 and remains on the surface of the image carrier 201 is removed by the cleaning device 206. Then, the intermediate transfer belt 207 with the non-visible toner image formed on the outer circumferential thereof is located on a position at which the subsequent yellow toner image is to be stacked and transferred on the non-visible toner image while maintaining the non-visible toner image on the outer circumferential surface of the intermediate transfer belt 207. Subsequently, with respect to magenta, cyan, and black toner images, the electrification process by the electrifier 202, the process of irradiating image light by the exposing device 203, the process of forming toner images by the respective developers 204M, 204C, 204K, and the process of transferring the toner image on the outer circumferential surface of the intermediate transfer belt 207 are sequentially repeated.

As a result, the non-visible toner image and the full-color toner image (visible toner image) constituting four colors of toner images are carried on the outer circumferential surface of the intermediate transfer belt 207. The full-color visible toner image and the non-visible toner image are collectively transferred to a medium (paper) by the secondary transfer roll 211. Accordingly, on a surface on which an image is formed, a recorded image in which the full-color visible image and the non-visible image are mixed can be obtained. As a result of the sequence in the primary transfer process, the non-visible image is formed on the top layer of the medium. Accordingly, since the non-visible image in which a code image shown in Fig. 2 is printed is formed on an upper surface of the visible image on which the document image is printed, reading of the non-visible image is not disturbed by the visible image. Also, instead of the full-color visible image, the visible image may be made of, for example, a monochrome color or a plus one color in which another color is added. As a result, the visible image and the non-visible image are simultaneously formed.

A data structure accumulated in the electronic document address accumulating section 38 of Fig. 1 will now be described.

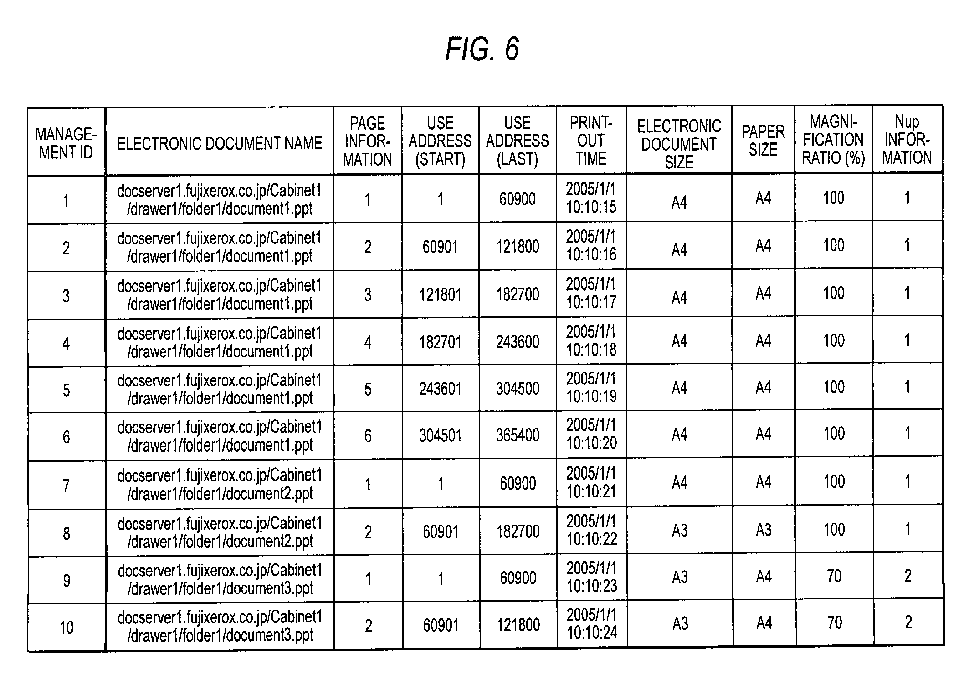

Fig. 6 is a diagram showing an example of a data structure for managing the correlation among the electronic document, address information, and medium identification information. Fig. 6 shows an example of a content accumulated in the electronic document address accumulating section 38. The data structure shown in Fig. 6 has a management ID, an electronic document name, page information, a used address (start), a used address (last), print-out time, an electronic document size, a paper size, a magnification ratio (%), Nup information. The management IDs 1 to 6 show six printed pages of an electronic document having the same image. Therefore, the management IDs 1 to 6 have the same URL in the electronic document name, and have the page information indicated by 1 to 6. Also, the management IDs 7 and 8 have two consecutively printed pages of the electronic document having the same image, and have the page information indicated by 1 and 2. Similarly, the management IDs 9 and 10 have two consecutively printed pages of the electronic document having the same image, and have the page information indicated by 1 and 2.

The present embodiment has a feature that the used addresses are assigned according to the size of the paper to be outputted. In Fig. 6, one A4-sized paper is assigned 60900 addresses, and one A3-sized paper is assigned 121800 addresses (see the management ID 8). The used addresses are reset for each electronic document. Therefore, in the example shown in Fig. 6, after six A4-sized papers (365400 addresses) are assigned over the management IDs 1 to 6, the management ID 7 for printing the document image of a next electronic document is reset and the used address is initiated from the first. Similarly, after 182700 addresses corresponding to the sum of one A4-sized paper and one A3-sized paper are assigned over the management IDs 7 and 8, the management ID 9 for printing a next electronic document is reset and the used address is initiated from the first. In this case, the management IDs 9 and 10 have the Nup information '2', and thus two electronic documents are printed on one paper. Consequently, the A3-sized electronic document is printed on the A4-sized paper, which results in the magnification ratio of 70%. In this case, while the sizes of the electronic documents are equal to each other, for example, A3-sized documents, one printed paper is assigned with 60900 addresses to fit to the size of the printed paper.

Although address assignment is constituted to be reset in units of electronic document, the address assignment may be constituted to be reset in units of printing job. That is, in units of job, the same job is assigned with consecutive addresses, even when the pages of the electronic document are changed. In addition, addresses can be assigned without resetting.

In addition, for example, when an A4-sized electronic document is reduced in size to 70%, there is a blank space, for example, a portion as much as a half page, in which there does not exist the electronic document. Similarly, if an electronic document having a plurality of odd pages is printed, for example, with the 2up, a blank space as much as a half page is created in the last page. First, the blank space is not assigned with addresses, and the code image using the non-visible toner is not formed. However, since a user may write characters by hand in the blank space, it is preferable that the blank space is assigned with addresses and the code image is formed using the non-visible toner in the blank space.

Also, in Fig. 6, the print-out time is used as information for specifying the medium. The print-out time is specified for each medium in the printing device 30, such that the medium can be uniquely specified. Since the print-out time is included as identification information in the code image, for example, the medium ID, which is individually assigned from a predetermined management server, does not need to be used. Also, the medium specification information is completely different from the ID of the electronic document. For example, when a plurality of copies of the same electronic document are printed, or a plurality of pages of the electronic document are printed in one medium using Nup, it is not possible to match the pages of the electronic document with the medium using the electronic document ID. In the present embodiment, it is possible to identify in units of printed medium and to manage the electronic document in units of medium by causing and printing the medium specification information to be included in the code image, such that a markedly outstanding management system over the related art can be provided. Also, if the medium specification information is set by combining the print-out time with the device ID for identifying the printing device 30, the property as the medium specification information is infinite. Therefore, according to the present embodiment, for example, without previously assigning a finite address space, which is provided by Anoto AB, it is possible to form a substantially infinite range of addresses whenever printing is performed.

Also, as the medium specification information, there may be used a combination of the device ID for identifying the printing device 30 and information concerning the count number of papers counted by a counter (not shown) of the printing device 30 whenever the papers are printed. When the combination of the device ID and the count number is used, the print-out time does not need to be managed and the amount of information required for the code image can be reduced. Also, information (for example, user ID) on the user having issued the print instruction, information concerning the name of an organization in which printing is performed, and information concerning the position at which printing is performed may be selected as the medium specification information. For example, the information concerning the user or the organization can be recognized by reading a card if a device is used in which printing can be made by inserting the card. Also, if the personal computer 10 shown in Fig. 1 issues the print instruction, identification information can be identified by information belonging to the personal computer 10.

The pen-type input device 50 will now be described.

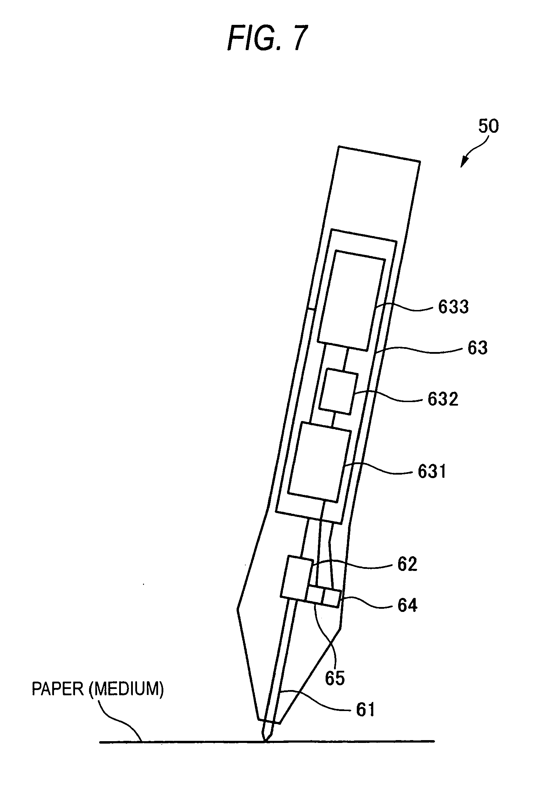

Fig. 7 shows the configuration of the pen-type input device 50. Although the pen-type input device 50 has been primarily described about the function for communication with the printing device 30 in Fig. 1, the overall configuration of the pen-type input device 50 is shown in Fig. 7 including the function of reading the non-visible image. The pen-type input device 50 includes a writing section 61, such as a pen, that writes characters or figures on the medium (paper), on which the combination of the code image and the document image is printed, and a writing-pressure detecting section 62 that monitors the motion of the writing section 61 and detects the pressure of the pen-type input device 50 applied on the paper. Also, the pen-type input device 50 includes a control section 63 that controls the entire operation of the pen-type input device 50, an infrared irradiating section 64 that irradiates infrared light in order to read the code image on the paper, and an image input section 65 that complements and inputs the code image onto which infrared light is irradiated.

The control section 63 will now be described in detail.

The control section 63 includes a code acquiring section 631, a trajectory calculating section 632, and an information storing section 633. The code acquiring section 631 interprets an image inputted from the image input section 65 and acquires a code. The trajectory calculating section 632 calculates a trajectory of the front of the pen by correcting a mismatch between the coordinate of the pen front of the writing section 61 and the coordinate of an image complemented by the image input section 65 with respect to the code acquired by the code acquiring section 631. The information storing section 633 stores the code acquired by the code acquiring section 631 or the trajectory information calculated by the trajectory calculating section 632.

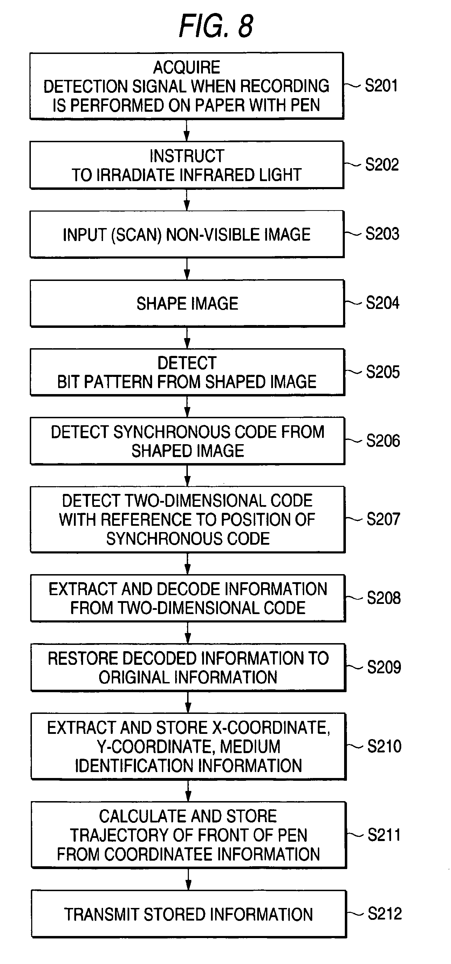

Fig. 8 is a flow chart showing a process, which is executed primarily in the control section 63 of the pen-type input device 50. In the pen-type input device 50, for example, when characters or figures are recorded on the paper, the control section 63 acquires a detection signal, indicating that recording is performed on the paper with the pen, from the writing-pressure detecting section 62 (Step S201). Upon detecting the detection signal, the control section 63 instructs the infrared irradiating section 64 to irradiate infrared light onto the paper (Step S202). Infrared light irradiated onto the paper by the infrared irradiating section 64 is absorbed by the non-visible image. The image input section 65 complements the code image onto which infrared light is irradiated. The control section 63 inputs (scans) the non-visible image through the image input section 65 (Step S203).

Subsequently, the code acquiring section 631 of the control section 63 performs a process of detecting the code image represented in the steps S204 to S210. First, the inputted scan image is shaped (Step S204). Shaping of the scan image implies gradient correction or noise removal. A bit pattern (a slant line pattern), such as slash '/' or backslash '\', is detected from the shaped scan image (Step S205). In addition, a synchronous code, which is a code for determining a position of the two-dimensional code, is detected from the shaped scan image (Step S206). The code acquiring section 631 detects the two-dimensional code with reference to the position of the synchronous code (Step S207). Also, information, such as ECC (Error Correcting Code) or the like, is extracted from the two-dimensional code and then is decoded (Step S208). The decoded information is restored to original information (Step S209).

The code acquiring section 631 of the control section 63 reads an X-coordinate, a Y-coordinate, and medium identification information from the code information restored in such a manner, and stores them in the information storing section 633 (Step S210). On the other hand, the trajectory calculating section 632 calculates the trajectory of the front of the pen from the coordinate information stored in the information storing section 633, and stores the trajectory in the information storing section 633 (Step S211). The identification information, the address information, or trajectory information stored in the information storing section 633 is transmitted to an external device via the communication function shown in Fig. 1 in wired or wireless manner (Step S212).

The stored information transmitted from the pen-type input device 50 is processed by the electronic document managing section 31 of the printing device 30. For example, writing information by the pen-type input device 50 is added to electronic information specified by the medium specification information, such that synthesized information of the writing information and the electronic information is displayed on the display device (not shown). Also, the writing information may be stored as corrected information of the original electronic document stored in the repository. Also, when writing is performed again after writing is first performed, the corrected information may be also read in addition to the original electronic document, such that new writing information can be added to the electronic document including the corrected information.

Next, the system configuration different from that shown in Fig. 1 will now be described.

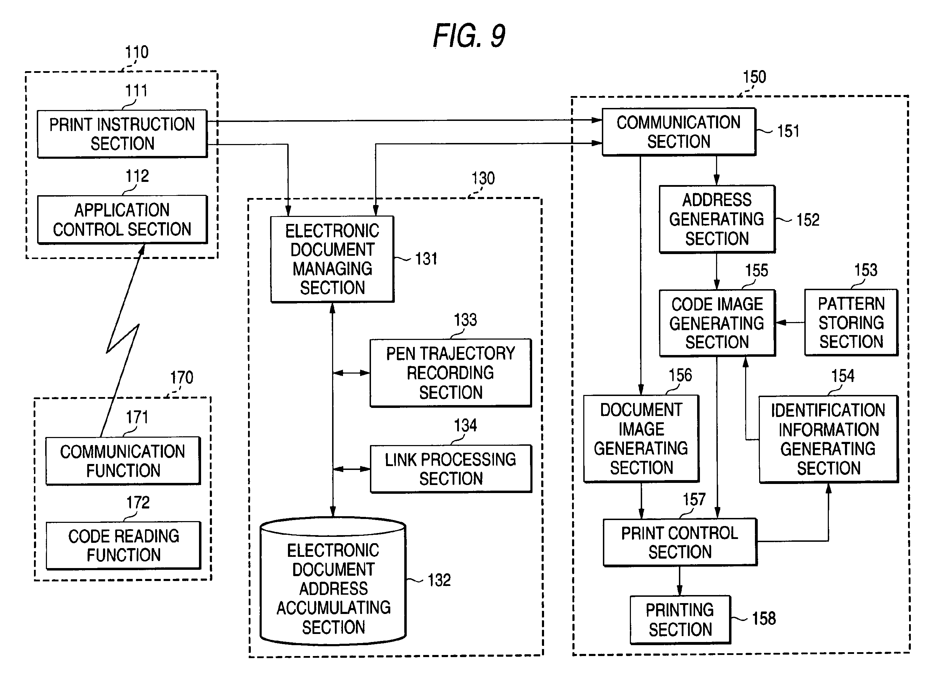

Fig. 9 shows another configuration of an electronic document management system. The electronic document management system shown in Fig. 9 has a feature that an electronic document management device 130 and a printing device 150 are separated from each other. The system shown in Fig. 9 includes a personal computer 110, an electronic document management device 130, a printing device 150, and a pen-type input device 170.

The personal computer 110 includes a print instructing section 111 which has the same function as the print instructing section 11 of the personal computer 10 shown in Fig. 1. Also, the personal computer 110 shown in Fig. 9 includes an application control section 112. The application control section 112 opens documents in an existing application and operates the application using the pen-type input device 170, for example, application sharing in an electronic conference system. More specifically, when the pen is designated by the pen-type input device 170, the application is operated by transmitting to the application the same event as that when a position is designated using a mouse and clicking the mouse. For example, when tapping on a specified position on a medium with the pen-type input device 170, the same event as that when the left button of the mouse is clicked with respect to the position of the application corresponding to the position on the medium is transmitted.

Moreover, although the print instruction and the application are performed in the same personal computer 110 in the example of Fig. 9, they may be performed in different personal computers.

The pen-type input device 170 includes a communication function 171 that communicates with an external device, which is similar to the communication function 51 of the pen-type input device 50 shown in Fig. 1. However, the communication function 171 communicates with the application control section 112 of the personal computer 110 in the example shown in Fig. 9, while the communication function 51 communicates with the printing device 30 in the example shown in Fig. 1. Also, the pen-type input device 170 shown in Fig. 9 includes a code reading function 172 which reads and interprets code information. Moreover, the detailed configuration of the pen-type input device 170 may be the same as that of the pen-type input device 50 shown in Fig. 7.

The electronic document management device 130 includes an electronic document managing section 131 that manages the correlation between generated addresses and electronic documents, and an electronic document address accumulating section 132 that accumulates a data structure, as shown in Fig. 6, for example, the correlation among electronic documents, address information, and medium identification information. Also, the electronic document management device 130 includes a pen trajectory recording section 133 that records a pen trajectory made by a user, and a link processing section 134 that performs a process about link information set in the electronic documents. The electronic document management device 130 having such functions may be provided in a server different from or equal to a server for a repository connected to a network in order to provide electronic documents. Also, in the example shown in Fig. 9, the electronic document management device 130 is provided separately from the printing device 150, unlike the example shown in Fig. 1.

The printing device 150 includes a communicating section 151 that receives a print instruction from the print instructing section 111 and, at the same time, acquires electronic documents from the repository via the network. When the communicating section 151 acquires the electronic documents, for example, it is possible to use a URL included in the print instruction. The communicating section 151 also outputs the correlation information among electronic documents, addresses printed on a medium, and medium identification information to the electronic document management device 130 after printing.

Also, the printing device 150 includes an address generating section 152, a pattern storing section 153, an identification information generating section 154, and a code image generating section 155, like the printing device 30 shown in Fig. 1. The address generating section 152 generates address information concerning consecutive addresses to be printed on the medium. The pattern storing section 153 stores patterns used as code images in a memory. The identification information generating section 154 generates information (medium identification information) for uniquely specifying the medium. The code image generating section 155 generates code images using patterns read from the pattern storing section 153 on the basis of addresses generated and encoded by the address generating section 152, and medium identification information generated and encoded by the identification information generating section 154.

Also, the printing device 150 includes a document image generating section 156 that generates a document image from an electronic document acquired through the communicating section 151, a print control section 157 that controls printing, and a printing section 158 that forms images on a medium, for example, using the configuration shown in Fig. 5. The print control section 157 overlaps the document image generated by the document image generating section 156 and the code image generated by the code image generating section 155 to output image data to the printing section 158.

In the electronic document management system shown in Fig. 9, a print image including a code image is formed using the above-described configuration as shown in Fig. 4. When writing or designating is performed using the same pen-type input device 170 as the pen-type input device 50 shown in Fig. 7 on the surface of the paper (medium), on which the print image is formed, that information is transmitted to the electronic document management device 130 through the application control section 112 of the personal computer 110. The electronic document management device 130 records the trajectory of the pen-type input device 170 or processes the link designation by the pen-type input device 170 using the content read from the electronic document address accumulating section 132.

Finally, the system configuration including the repository that stores the electronic documents will be described.

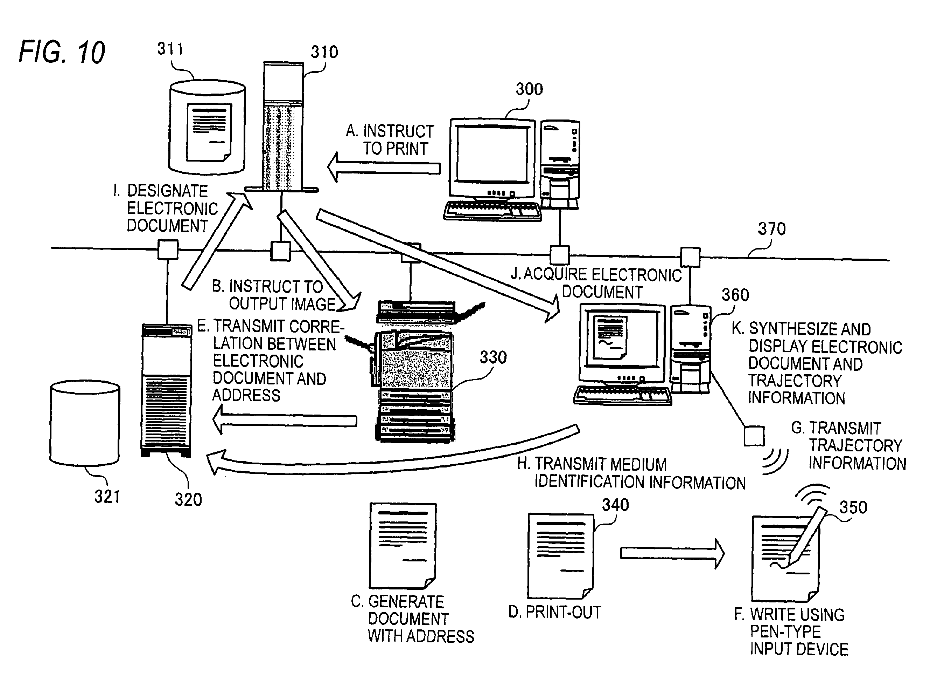

Fig. 10 shows another configuration of an electronic document management system. The system shown in Fig. 10 includes a terminal 300 that instructs to print electronic documents, a document management server 310 that manages the electronic documents to be printed, an address-embedded document generating server 320 that imparts address information (including medium identification information) to the electronic documents to be printed, and an image forming device 330 (printing device) that prints the electronic documents after the addresses are imparted. The terminal 300, the document management server 310, the address-embedded document generating server 320, and the image forming device 330 are connected to a network 370. Also, the document management server 310 is connected to the repository 311 that the electronic documents. Also, the address-embedded document generating server 320 is connected to an address information DB (database) 321 that manages address information. Also, the system includes an address-embedded paper (medium) 340 that is printed out by the image forming device 330, and a pen-type input device 350 that records characters or figures on the address-embedded paper 340 and reads information concerning the characters or figures. Also, the network 370 is connected to a terminal 360 that overlaps and displays the documents managed by the document management server 310 and records information read by the pen-type input device 350.

The operation of the system will now be descried.

The terminal 300 instructs the document management server 310 to print a specified electronic document stored in the repository 311 (A). Accordingly, the document management server 310 outputs the print instruction to the image forming device 330 (B). The image forming device 330 generates an address-embedded document (C) and outputs an address-embedded paper 340 (D). On the other hand, the image forming device 330 transmits information concerning the correlation between the electronic documents to be printed and address information (including medium identification information) to the address-embedded document generating server 320 (E). The address-embedded document generating server 320 receives the information and stores the information concerning the correlation between the electronic documents and the addresses in the address information DB 321.

Here, the address information to be imparted includes coordinate information (X-coordinate and Y-coordinate) for specifying the position on the paper. Also, the address information includes medium specification information for uniquely specifying a paper to be outputted. As the medium identification information, print-out time acquired from the image forming device 330, a machine ID of the image forming device 330, a count value of an output, and the like are used.

On the paper printed out by the image forming device 330, the code image as shown in Fig. 2 is formed on the image (character, figure, photo, or the like) from the electronic document, for example, using the non-visible toner. Next, the user writes on the printed paper using the pen-type input device 350 (F), as shown in Fig. 7. Trajectory information generated by writing and the medium identification information recognized by the pen-type input device 350 are transmitted to the terminal 360 (G). The terminal 360 transmits the received medium identification information to the document generating server 320 (H). The document generating server 320 specifies the electronic document using the information stored in the address information DB 321. The document generating server 320 designates the electronic document to the document management server 310 (I). Accordingly, the electronic document stored in the repository 311 is provided to the terminal 360. The terminal 360 acquires original data of the electronic document, on which the user writes using the pen-type input device 350 (J). The terminal 360 synthesizes and displays on the display device the electronic document and the trajectory information (K).

As apparent from the above description, according to the present embodiment of the present invention, it is possible to manage the documents based on the correlation between the address space used in the output medium and the original document for each printed output medium. Accordingly, for example, when a plurality of copies of electronic document having the same image are printed, it is possible to identify and manage the input performed by the user with the pen-type input device 50 (the pen-type input device 170, the pen-type input device 350) for each medium, since each medium has a different address space.

Also, the management according to the present embodiment may be excellent in that it is not necessary to use a previously recorded paper. In addition, since it is not necessary to use an address space previously assigned by an address management device that manages the entire addresses collectively, it is possible to provide a convenient electronic document management system.

As described above, according to an embodiment of the present invention, a print instruction unit issues a print instruction to print an electronic document, and an address information generation unit generates address information that is printed on a surface of a medium, on which the electronic document is printed, and specifies a position of the surface of the medium based on the print instruction from the print instruction unit. Further, an electronic document management unit manages the correlation between the address information generated by the address information generation unit and the electronic document, and an accumulation unit accumulates information concerning the correlation to be managed by the electronic document management unit. Further, a code image generation unit converts the address information into a code image to be printed, and a printing unit prints the generated code image and an image of the electronic document on the surface of the medium. Further, a code image reading unit reads a code image printed on the medium by the printing unit, and an output unit outputs information concerning the read code image. The term 'electronic document' is not limited to text information but includes information about figures or pictures.

The address information generated by the address information generation unit may be information printed in the surface of the medium to fit to the size of the medium, on which the electronic document is printed. For example, the address information is generated to fit to the size of the medium, even when a print instruction to magnify or reduce the electronic document is issued.

Further, the output unit may output the information concerning the read code image, for example, which is read by a pen-type input device, to the electronic document management unit.

Further, the code image reading unit may detect an operation of a user for the surface of the medium and read the code image at a position specified by the detected operation.

In addition, the code image generation unit may generate the code image including medium identification information for specifying the medium, on which the electronic document is printed. Further, the medium identification information may include at least one of device identification information concerning a device printing the electronic document, information concerning the count amount of the device, and time information concerning printed time of the medium. However, since the medium cannot be specified only by the device identification information, actually, other information needs to be included in addition to the device identification.

On the other hand, in an image forming device, to which the present invention is applied, an address information generation unit receives a print instruction to print an electronic document and dynamically generates address information concerning consecutive addresses printed on a surface of a medium, and a code image generation unit generates a code image to be printed including the address information generated by the address information generation unit. Further, a printing unit prints an image of the electronic document and the code image so as to overlap one another. Further, an accumulation unit accumulates the correlation between the address information generated by the address information generation unit and the electronic document. In addition, an output unit outputs the address information generated by the address information generation unit to an external device managing the electronic document.

The terms 'dynamically generating' implies that the address information is determined from the size of the medium printed whenever the print instruction is issued, unlike the related art in which addresses are previously assigned. Further, the address information generated by the address information generation unit may be reset at least for each job.

That is, according to the present invention, the code images generated by the code image generation unit may be different from one another for the same electronic document, if printed mediums are different from one another. Further, the address information generation unit may generate the address information according to print conditions, such as magnification or reduction of the electronic document and/or reduction of a plurality of pages into a single page.

According to another aspect of the present invention, a device (for example, an electronic document management device or a printing device) includes an electronic document management unit that manages the correlation between a printed electronic document and address information concerning consecutive addresses, which are dynamically generated based on a print instruction to print the electronic document to fit to the size of a medium, on which the electronic document is printed, and are printed on the surface of the medium, and an electronic document address accumulation unit that accumulates information managed by the electronic document management unit.

Here, the electronic document management unit may manage the correlation with the electronic document including information for specifying the medium. Further, the electronic document management unit may acquire a predetermined address instructed by a pen-type input device from the medium, on which the electronic document and the address information are printed.

Further, the device may further include a link processing unit that performs a link process for accessing to a position based on a method (for example, URL) of describing the position of an information resource printed on an address instructed by the pen-type input device.

According to a further aspect of the present invention, a printing medium includes a first image, in which an electronic document is printed in a visible image based on an instruction of a user, and a second image that is formed in a non-visible image on a side of an image surface including a region, in which the first image is formed when the first image is printed, and has address information concerning consecutive addresses generated to fit to the size of the medium on the basis of the print instruction. The correlation between the electronic document and the address information is provided when being managed by a management device.

Here, the second image may include information specifying the medium, and the information specifying the medium may include at least one of device identification information concerning a device printing the electronic document, information concerning the count amount of the device, and time information concerning printed time of the medium.

Further, the address information included in the second image may be generated to fit to the size of the medium, even when a print instruction to magnify or reduce the electronic document is issued.

In addition, the non-visible image forming the second image may be formed by a non-visible toner having an absorption ratio of at least 20% in a near-infrared region.

In addition, when the first image is a picture image, the second image may not be formed on the picture image. In this case, a position at which the photo image is preferably not contaminated can be prevented from being contaminated due to the second image.

According to a further aspect of the present invention, a method of managing an electronic document includes receiving a print instruction to print an electronic document, generating address information that is printed on a surface of a medium to fit to the size of the medium, on which the electronic document is printed, and specifies a position of the surface of the medium on the basis of the print instruction, accumulating information concerning the correlation between the generated address information and the electronic document in a memory, converting the generated address information into a code image to be printed, and printing the generated code image and an image of the electronic document on the surface of the medium so as to overlap each other. In addition, the method may further include reading a code image printed on the medium, and outputting information concerning the read code image.

Further, the present invention can be applied as a program installed in a computer. That is, a program for managing a printed electronic document causes a computer, which receives information concerning a print instruction to print an electronic document, to execute generating address information that is printed on a surface of a medium to fit to the size of the medium, on which the electronic document is printed, and specifies a position of the surface of the medium on the basis of the print instruction, accumulating information concerning the correlation between the generated address information and the electronic document in a memory, converting the generated address information into a code image to be printed.

Moreover, the program can be provided to a computer through a medium, such as the CD-ROM or the DVD-ROM, or can be provided from a remote program transmitting device to the computer via a network, such as Internet or the like. Further, the program is stored, for example, in a memory in the computer of a printing device or a document management device, and is executed by a CPU of the computer.

According to the present invention, it is possible to manage a document using the relationship between an address space, which is generated at the time of printing and is used in an output medium, and information of an original electronic document.

The foregoing description of the embodiments of the present invention has been provided for the purposes of illustration and description. It is not intended to be exhaustive or to limit the invention to the precise forms disclosed. Obviously, many modifications and variations will be apparent to pr actitioners skilled in the art. The embodiments were chosen and described in order to best explain the principles of the invention and its practical applications, thereby enabling others skilled in the art to understand the invention for various embodiments nts and with the various modifications as are suite d to the particular use contemplated. It is intend ed that the scope of the invention be defined by th e following claims and their equivalents.

The entire disclosure of Japanese Patent Application No. 2005-108643 filed on April 5, 2005 including specification, claims, drawings and abstract is incorporated herein by reference in its entirety.

## Claims

1. An electronic document management system comprising:
a print instruction unit that issues a print instruction to print an electronic document;
an address information generation unit that generates address information printed on a surface of a medium for a position of the surface of the medium based on the print instruction from the print instruction unit, the address information being printed on a surface of a medium on which the electronic document is printed;
an electronic document management unit that manages the correlation between the address information generated by the address information generation unit and the electronic document;
an accumulation unit that accumulates information concerning the correlation to be managed by the electronic document management unit;
a code image generation unit that converts the address information into a code image to be printed; and
a printing unit that prints the code image generated by a code image generation unit and an image of the electronic document on the surface of the medium.

2. The electronic document management system according to claim 1,
wherein the address information generated by the address information generation unit is information printed in one surface of the medium to fit to the size of the medium, on which the electronic document is printed.

3. The electronic document management system according to claim 1, further comprising:
a code image reading unit that reads the code image printed on the medium by the printing unit; and
an output unit that outputs an information concerning the code image read by the code image reading unit.

4. The electronic document management system according to claim 3,
wherein the output unit outputs the information concerning the code image read by the code image reading unit to the electronic document management unit.

5. The electronic document management system according to claim 3,
wherein the code image reading unit detects an operation of a user to the surface of the medium and reads the code image at a position specified by the detected operation.

6. The electronic document management system according to claim 1,
wherein the code image generation unit generates the code image including a medium identification information for specifying the medium, on which the electronic document is printed.

7. The electronic document management system according to claim 6,
wherein the medium identification information includes at least one of device identification information concerning a device printing the electronic document, information concerning the count amount of the device, and time information concerning printed time of the medium.

8. The electronic document management system according to claim 1,
wherein the address information generated by the address information generation unit is generated to fit to the size of the medium, even when a print instruction to magnify or reduce the electronic document is issued.

9. An image forming device comprising:
an address information generation unit that receives a print instruction to print an electronic document and dynamically generates address information concerning consecutive addresses printed on a surface of a medium;
a code image generation unit that generates a code image to be printed including the address information generated by the address information generation unit; and
a printing unit that prints an image of the electronic document and the code image so as to overlap each other.

10. The image forming device according to claim 9,
wherein the code images generated by the code image generation unit are different from one another for the same electronic document, if printed mediums are different from one another.

11. The image forming device according to claim 9, further comprising:
an accumulation unit that accumulates the correlation between the address information generated by the address information generation unit and the electronic document.

12. The image forming device according to claim 9, further comprising:
an output unit that outputs the address information generated by the address information generation unit to an external device managing the electronic document.

13. The image forming device according to claim 9,
wherein the address information generated by the address information generation unit is reset at least for each job.

14. The image forming device according to claim 9,
wherein the address information generation unit generates the address information according to print conditions including magnification or reduction of the electronic document and/or reduction of a plurality of pages into a single page.

15. A device comprising:
an electronic document management unit that manages the correlation between an electronic document to be printed and address information concerning consecutive addresses, which are dynamically generated based on a print instruction to print the electronic document to fit to the size of a medium, on which the electronic document is printed, and are printed on a surface of the medium; and
an electronic document address accumulation unit that accumulates the information managed by the electronic document management unit.

16. The device according to claim 15,
wherein the electronic document management unit manages the correlation with the electronic document including information for specifying the medium.

17. The device according to claim 15,
wherein the electronic document management unit acquires a predetermined address instructed by a pen-type input device from the medium, on which the electronic document and the address information are printed.

18. The device according to claim 17, further comprising:
a link processing unit that performs a link process for accessing to a position based on a method of describing the position of an information resource printed on an address instructed by the pen-type input device.

19. A printing medium comprising:
a first image, in which an electronic document is printed in a visible image based on an instruction of a user; and
a second image that is formed in a non-visible image on a side of an image surface including a region in which the first image is formed, and has address information concerning consecutive addresses generated to fit to the size of the medium on the basis of the print instruction.

20. The printing medium according to claim 19,
wherein the second image includes information specifying the medium, and the information specifying the medium includes at least one of device identification information concerning a device printing the electronic document, information concerning the count amount of the device, and time information concerning printed time of the medium.

21. The printing medium according to claim 19,
wherein the address information included in the second image is generated to fit to the size of the medium, even when a print instruction to magnify or reduce the electronic document is issued.

22. The printing medium according to claim 19,
wherein the non-visible image forming the second image is formed by a non-visible toner having an absorption ratio of at least 20% in a near-infrared region.

23. The printing medium according to claim 19,
wherein the second image is not formed on the picture image when the first image is a picture image.

24. The printing medium according to claim 19, wherein the printing medium is provided under the condition that the correlation between the electronic document and the address information is managed by a management device.

25. A method of managing an electronic document, the method comprising:
receiving a print instruction to print an electronic document;
generating address information that is printed on a surface of a medium to fit to the size of the medium, on which the electronic document is printed, and specifies a position of the surface of the medium on the basis of the print instruction;
accumulating information concerning correlation between the address information and the electronic document in a memory; and
converting the address information into a code image to be printed.

26. The method of claim 25, further comprising:
printing the code image and an image of the electronic document on the surface of the medium so as to overlap each other.

27. The method according to claim 25, further comprising:
reading a code image printed on the medium; and
outputting information concerning the code image.

28. A program product readable by a computer, the program product storing a program of instructions executable by the computer to perform a function for managing a printed electronic document, the function comprising;
generating address information which is printed on a surface of a medium to fit to the size of the medium, on which the electronic document is printed, and specifies a position of the surface of the medium on the basis of the print instruction; and
accumulating information concerning the correlation between the generated address information and the electronic document in a memory.

29. The program product according to claim 28, the function further comprising:
converting the address information into a code image to be printed.
